# EUROPEAN PATENT APPLICATION

(11) **EP 4 750 083 A1**
(43) Date of publication of application: **27.05.2026**
(21) Application number: 25213857.3
(22) Date of filing: 06.11.2025
(51) Int. Cl.: H04R 5/02, H04S 7/00

(54) **AUDIO SYSTEM**

(30) Priority: 22.11.2024 JP 2024203800
(71) Applicant: Alps Alpine Co., Ltd., Ota-ku, Tokyo 145-8501 (JP)
(72) Inventor: Toda, Masato, Ota-ku, Tokyo (JP); Tanno, Keita, Ota-ku, Tokyo (JP); Nihira, Kazumasa, Ota-ku, Tokyo (JP)
(74) Representative: Schmitt-Nilson Schraud Waibel Wohlfrom Patentanwälte Partnerschaft mbB

(57) **Abstract**

An audio system includes a first left speaker arranged at a position corresponding to a left side of a head of a user on a first seat, a first right speaker arranged at a position corresponding to a right side of the head of the user on the first seat, a second left speaker arranged at a position corresponding to a left side of a head of a user on a second seat disposed side by side with the first seat, a second right speaker arranged at a position corresponding to a right side of the head of the user on the second seat, a front speaker arranged at a central position between the first seat and the second seat in a lateral direction, the central position being in front of the first seat and the second seat, and acoustic signal processing circuitry.

## Description

This application is based upon and claims priority to Japanese Patent Application No. 2024-203800 filed on November 22, 2024.

The present disclosure relates to an audio system.

There is a known related-art technique in which an acoustic transfer characteristic (head-related transfer function) from a sound image localization target position to each of the listener's left and right ears is convolved with an audio signal to generate left and right channel audio signals. The generated audio signals are then output to left and right speakers, thereby providing a sense of localization of the sound image at the sound image localization target position. See, for example, Japanese Patent No. 3395809.

When the above-described technique of outputting left and right channel audio signals, which are obtained by convolving an audio signal with head-related transfer functions for the respective left and right ears, to left and right speakers is applied to an audio system in which speakers are provided at the left and right sides of a seat, such as on the left and right sides of a headrest, the speakers are positioned behind the user's head. Accordingly, unless precise adjustments are performed for each individual user, it is difficult to achieve a favorable sense of localization of a sound image at a front position of the user.

The present disclosure achieves a favorable sense of localization of a sound image at a front position with an audio system using speakers provided at the left and right sides of a seat.

The present disclosure relates to an audio system according to the appended claims. Embodiments are disclosed in the dependent claims.

An audio system according to an aspect includes a first left speaker arranged at a position corresponding to a left side of a head of a user who sits on a first seat; a first right speaker arranged at a position corresponding to a right side of the head of the user who sits on the first seat; a second left speaker arranged at a position corresponding to a left side of a head of a user who sits on a second seat, the second seat being disposed side by side with the first seat; a second right speaker arranged at a position corresponding to a right side of the head of the user who sits on the second seat; a front speaker arranged at a central position between the first seat and the second seat in a lateral direction, the central position being in front of the first seat and the second seat; and acoustic signal processing circuitry configured to: output a left channel signal of a first audio signal to the first left speaker, the first audio signal being a stereo two-channel signal; output a right channel signal of the first audio signal to the first right speaker; output a left channel signal of a second audio signal to the second left speaker, the second audio signal being a stereo two-channel signal identical to or different from the first audio signal; output a right channel signal of the second audio signal to the second right speaker; extract a component correlated with all of the left channel signal and the right channel signal of the first audio signal and the left channel signal and the right channel signal of the second audio signal; and output the extracted component as a front channel signal to the front speaker.

### BRIEF DESCRIPTION OF THE DRAWINGS

FIG. 1 is a diagram illustrating a configuration of an audio system according to an embodiment of the present disclosure;
FIGS. 2A to 2C are views illustrating an arrangement of speakers according to an embodiment of the present disclosure;
FIG. 3 is a diagram illustrating a configuration of head-related transfer function convolution circuitry according to an embodiment of the present disclosure;
FIGS. 4A and 4B are diagrams illustrating a configuration of each correlation component extraction circuitry according to an embodiment of the present disclosure;
FIGS. 5A and 5B are views illustrating use ranges of a front channel signal according to an embodiment of the present disclosure; and
FIGS. 6A to 6C are views illustrating a different configuration example of an audio system according to an embodiment of the present disclosure.

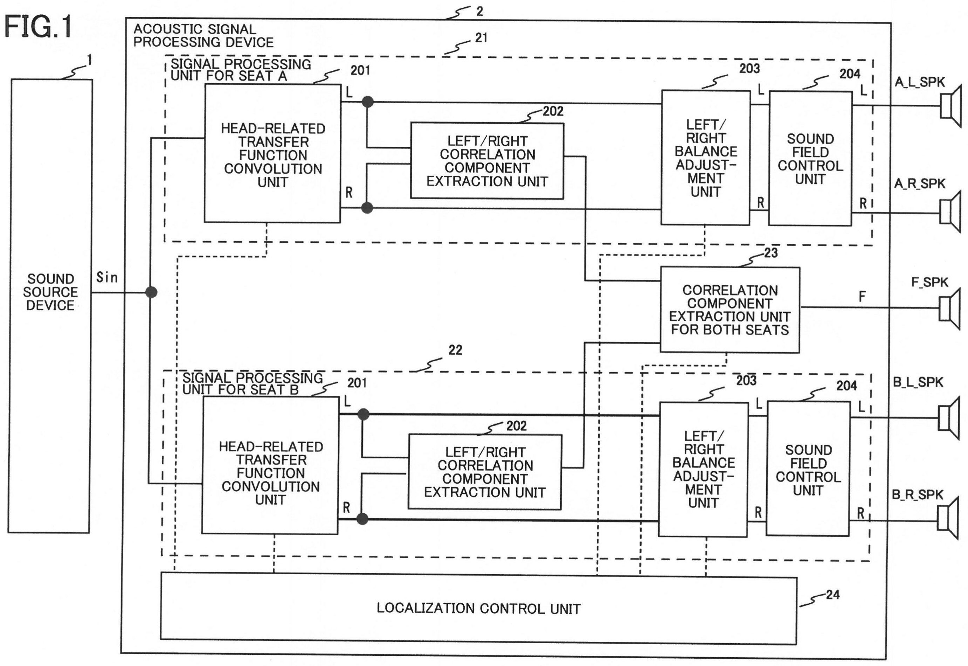

Hereinafter, embodiments of the present disclosure will be described. FIG. 1 illustrates a configuration of an audio system according to an embodiment of the present disclosure. Generally, the audio system may be a system mounted on a vehicle. As illustrated in FIG. 1, it includes a sound source device 1 configured to output a monaural one-channel audio signal Sin, an acoustic signal processing device 2, a left speaker A_L_SPK for a seat A, a right speaker A_R_SPK for the seat A, a left speaker B_L_SPK for a seat B, a right speaker B_R_SPK for the seat B, and a front speaker F_SPK. The acoustic signal processing device 2 is an electronic circuit (including a processor), such as a central processing unit (CPU), a graphics processing unit (GPU), a digital signal processor (DSP), a field-programmable gate array (FPGA), an application-specific integrated circuit (ASIC), or the like, and executes instruction codes stored in a memory or is designed as a circuit for a specific purpose, so as to execute various processes described in the present specification.

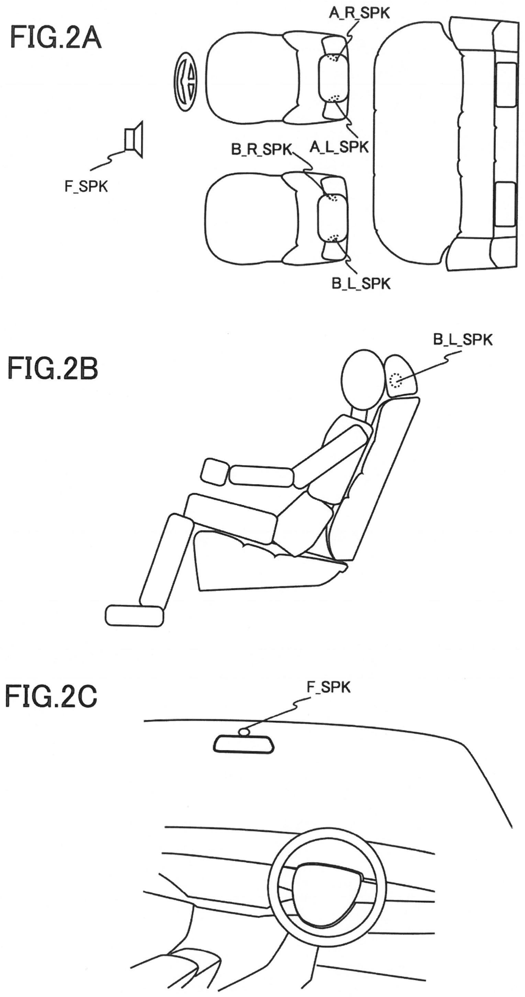

Herein, the seat A refers to one seat in the vehicle, while the seat B refers to a seat adjacent to the seat A in a lateral direction. In the following description, the seat A is a driver's seat in the vehicle, and the seat B is a front passenger seat. As illustrated in FIGS. 2A and 2B, the left speaker A_L_SPK for the seat A is arranged on the left side of a headrest of the driver's seat in the vehicle, the right speaker A_R_SPK for the seat A is arranged on the right side of the headrest of the driver's seat in the vehicle, the left speaker B_L_SPK for the seat B is arranged on the left side of a headrest of the front passenger seat in the vehicle, and the right speaker B_R_SPK for the seat B is arranged on the right side of the headrest of the front passenger seat in the vehicle.

Note that the left speaker A_L_SPK for the seat A may be arranged on the left side of a backrest of the driver's seat in the vehicle, the right speaker A_R_SPK for the seat A may be arranged on the right side of the backrest of the driver's seat in the vehicle, the left speaker B_L_SPK for the seat B may be arranged on the left side of a backrest of the front passenger seat in the vehicle, and the right speaker B_R_SPK for the seat B may be arranged on the right side of the backrest of the front passenger seat in the vehicle.

As illustrated in FIG. 2C, the front speaker F_SPK is arranged above a rearview mirror in the vehicle. Referring back to FIG. 1, the acoustic signal processing device 2 includes a signal processing unit 21 for the seat A, a signal processing unit 22 for the seat B, a correlation component extraction unit 23 for both seats, and a localization control unit 24. The signal processing unit 21 for the seat A and the signal processing unit 22 for the seat B have the same configuration and perform similar operations. That is, the signal processing unit 21 for the seat A and the signal processing unit 22 for the seat B each include a head-related transfer function convolution unit 201, a left/right correlation component extraction unit 202, a left/right balance adjustment unit 203, and a sound field control unit 204. The head-related transfer function convolution unit 201 convolves an audio signal Sin output from the sound source device 1 with a head-related transfer function for the left ear and a head-related transfer function for the right ear, which are set by the localization control unit 24. The head-related transfer function convolution unit 201 thereby generates a left and right (two-channel) stereo signal and outputs an L signal and an R signal of the stereo signal.

The left/right correlation component extraction unit 202 extracts and outputs correlation components of the L signal and the R signal output from the head-related transfer function convolution unit 201. Under control of the localization control unit 24, the left/right balance adjustment unit 203 adjusts a level balance between the L signal and the R signal output from the head-related transfer function convolution unit 201 and outputs the adjusted L signal and R signal. The sound field control unit 204 applies predetermined processing to the L signal and the R signal output from the left/right balance adjustment unit 203 and outputs the processed L signal and R signal to corresponding speakers. The speaker corresponding to the L signal of the signal processing unit 21 for the seat A is the left speaker A_L_SPK for the seat A. The speaker corresponding to the R signal of the signal processing unit 21 for the seat A is the right speaker A_R_SPK for the seat A. The speaker corresponding to the L signal of the signal processing unit 22 for the B seat is the left speaker B_L_SPK for the seat B. The speaker corresponding to the R signal of the signal processing unit 22 for the seat B is the right speaker B_R_SPK for the seat B.

The sound field control unit 204 of the signal processing unit 21 for the seat A performs crosstalk cancellation processing and the like as the predetermined processing. Specifically, an audio signal for canceling the L signal output from the left speaker A_L_SPK for the seat A at a position of a right ear of a user of the seat A is added to the R signal output to the right speaker A_R_SPK for the seat A. Likewise, an audio signal for canceling the R signal output from the right speaker A_R_SPK for the seat A at a position of a left ear of the user of the seat A is added to the L signal output to the left speaker A_L_SPK for the seat A.

The sound field control unit 204 of the signal processing unit 22 for the seat B similarly performs crosstalk cancellation processing and the like as the predetermined processing in which an audio signal for canceling an L signal output from the left speaker B_L_SPK for the seat B at a position of the right ear of the user of the seat B is added to an R signal output to the right speaker B_R_SPK for the seat B, and an audio signal for canceling an R signal output from the right speaker B_R_SPK for the seat B at a position of the left ear of the user of the seat B is added to an L signal output to the left speaker B_L_SPK for the seat B.

Next, the correlation component extraction unit 23 for both seats extracts a correlation component between the output signal from the left/right correlation component extraction unit 202 of the signal processing unit 21 for the seat A and the output signal from the left/right correlation component extraction unit 202 of the signal processing unit 22 for the seat B, and outputs the extracted component as an F signal to the front speaker F_SPK. Further, under control of the localization control unit 24, the correlation component extraction unit 23 for both seats controls whether the F signal is output to the front speaker F_SPK.

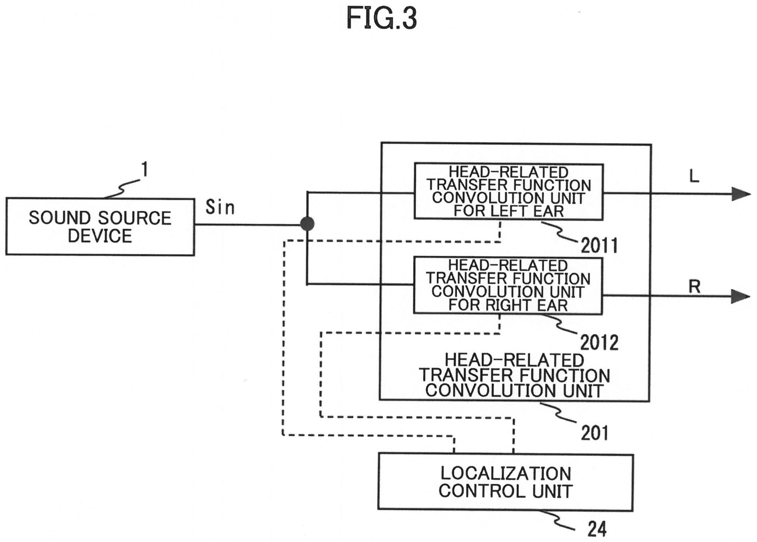

FIG. 3 illustrates a configuration of a head-related transfer function convolution unit 201 of each of the signal processing unit 21 for the seat A and the signal processing unit 22 for the seat B. As illustrated in FIG. 3, the head-related transfer function convolution unit 201 includes a head-related transfer function convolution unit 2011 for the left ear and a head-related transfer function convolution unit 2012 for the right ear. The head-related transfer function convolution unit 2011 for the left ear convolves the audio signal Sin output from the sound source device 1 with a head-related transfer function for the left ear set by the localization control unit 24, and outputs the result as an L signal. The head-related transfer function convolution unit 2012 for the right ear convolves the audio signal Sin output from the sound source device 1 with a head-related transfer function for the right ear set by the localization control unit 24, and outputs the result as an R signal.

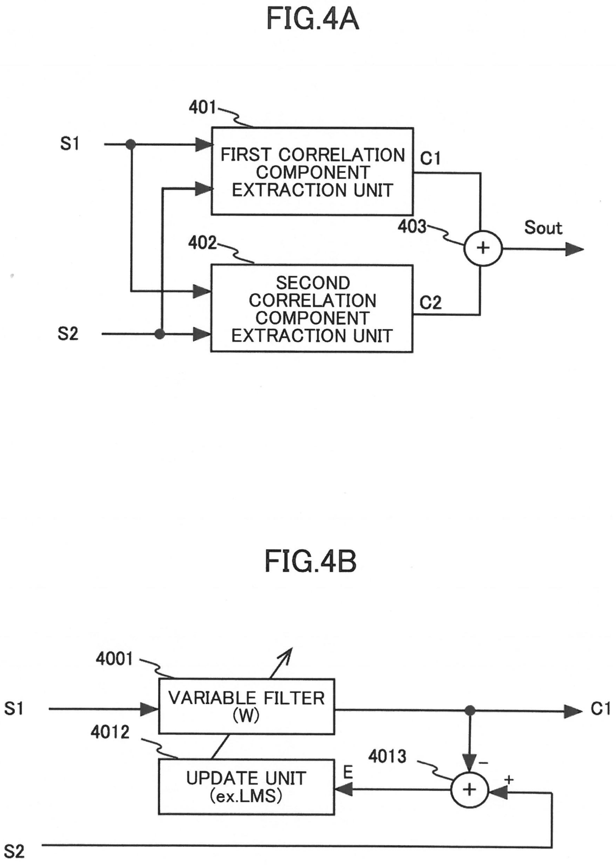

Next, a configuration of the left/right correlation component extraction unit 202 of each of the signal processing unit 21 for the seat A and the signal processing unit 22 for the seat B, and a configuration of the correlation component extraction unit 23 for both seats will be described. As described above, the left/right correlation component extraction unit 202 of each of the signal processing unit 21 for the seat A and the signal processing unit 22 for the seat B and the correlation component extraction unit 23 for both seats are processing circuitries configured to extract and output a correlation component between two input signals. A configuration of a correlation component extraction unit illustrated in FIG. 4A can be employed as a configuration of such processing circuitries configured to extract a correlation component between two signals.

The correlation component extraction unit illustrated in FIG. 4A extracts the correlation component between two input signals S1 and S2 and outputs Sout. The correlation component extraction unit includes first correlation component extraction unit 401, second correlation component extraction unit 402, and a correlation component addition unit 403. The first correlation component extraction unit 401 extracts and outputs a component C1 in the input signal S2. The component C1 is correlated with the input signal S1. The second correlation component extraction unit 402 extracts and outputs a component C2 in the input signal S1. The component C2 is correlated with the input signal S2. The correlation component addition unit 403 adds an output C1 from the first correlation component extraction unit 401 and an output C2 from the second correlation component extraction unit 402 and outputs the result as Sout.

FIG. 4B illustrates a configuration of a first correlation component extraction unit 401. As illustrated in FIG. 4B, the first correlation component extraction unit 401 includes a variable filter 4001, an update unit 4012 configured to update a transfer function (filter coefficient) W of the variable filter 4001 by an adaptive algorithm such as an LMS algorithm, and an adder 4013. The variable filter 4001, the update unit 4012, and the adder 4013 are included in an adaptive filter.

The variable filter 4001 receives the signal S1 as an input, and the adder 4013 subtracts an output of the variable filter 4001 from the signal S2 and outputs the result. The update unit 4012 executes the adaptive algorithm using the output of the adder 4013 as error, and updates the transfer function W of the variable filter 4001 so that error power is minimized.

The output power of the adder 4013 becomes minimized when the output of the variable filter 4001 coincides with the component C1 in the signal S2, which is correlated with the signal S1. Therefore, the component C1 in the signal S2, which is correlated with the signal S1, can be extracted as the output of the variable filter 4001. The configuration and operation of the second correlation component extraction unit 402 are the same as those of the first correlation component extraction unit 401 described above, except that the signals S1 and S2 are interchanged. Hereinafter, control performed by the localization control unit 24 in such a configuration will be described. The localization control unit 24 sets a target localization direction and a target localization position of a sound image of a target audio signal Sin in accordance with a preset configuration or an external command. The target localization position may be set by determining a distance from the target localization position to the user as a predetermined distance, in accordance with a target localization direction set by a preset configuration or an external command. First, the localization control unit 24 controls, in accordance with the target localization direction, whether an F signal of the correlation component extraction unit 23 for both seats is output to the front speaker F_SPK. That is, when the target localization direction is not within a front range, the localization control unit 24 stops outputting the F signal of the correlation component extraction unit 23 for both seats to the front speaker F_SPK, since a relatively favorable sense of localization toward the target localization direction can be provided only with the left and right speakers of the headrest. Only when the target localization direction is within a front range, the localization control unit 24 causes the F signal of the correlation component extraction unit 23 for both seats to be output to the front speaker F_SPK.

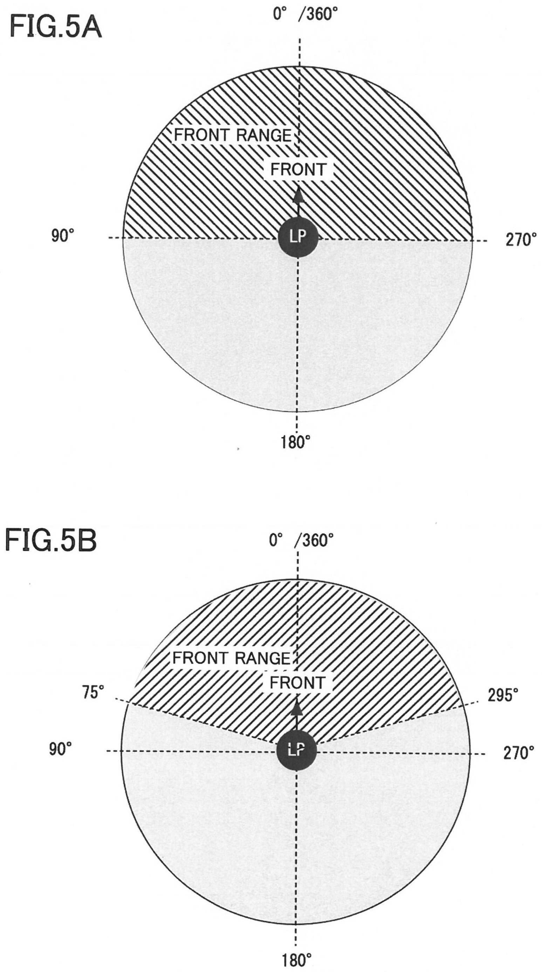

More specifically, as illustrated in FIG. 5A, for example, assume that the front is 0° and the angle is measured counterclockwise up to 360°. When the target localization direction is in a range from 90° to 270°, the localization control unit 24 stops outputting the F signal of the correlation component extraction unit 23 for both seats to the front speaker F_SPK. Conversely, when the target localization direction is in a range from 0° to 90° or in a range from 270° to 360°, which are defined as a front range, the localization control unit 24 causes the F signal of the correlation component extraction unit 23 for both seats to be output to the front speaker F_SPK.

Herein, the range of target localization directions defined as a front range, in which the localization control unit 24 causes an F signal of the correlation component extraction unit 23 for both seats to be output to a front speaker F_SPK, may be determined according to each application. For example, when a range of target localization directions in which a relatively favorable sense of localization toward the target direction can be provided only with the left and right speakers of the headrest is from 75° to 295°, as illustrated in FIG. 5B, the ranges from 0° to 75° and from 295° to 360° may be defined as the front range. In such a case, the F signal is output to the front speaker F_SPK only within the front range.

Next, when the target localization direction is within the front range, the localization control unit 24 sets a head-related transfer function for the left ear in the head-related transfer function convolution unit 2011 for the left ear of the signal processing unit 21 for the seat A, in accordance with a set target localization position of a sound image of the audio signal Sin. In this case, the head-related transfer function from the target localization position to the left ear of the user of the seat A is set to correspond to a transfer function in accordance with the target localization position. Similarly, the localization control unit 24 sets a head-related transfer function for the right ear in the head-related transfer function convolution unit 2012 for the right ear of the signal processing unit 21 for the seat A, in accordance with the target localization position. In this case, the head-related transfer function from the target localization position to the right ear of the user of the seat A is set to correspond to a transfer function in accordance with the target localization position.

Likewise, when the target localization direction is within the front range, the localization control unit 24 sets a head-related transfer function for the left ear in the head-related transfer function convolution unit 2011 for the left ear of the signal processing unit 22 for the seat B, in accordance with a set target localization position of a sound image of the audio signal Sin. In this case, the head-related transfer function from the target localization position to the left ear of the user of the seat B is set to correspond to a transfer function in accordance with the target localization position. Similarly, the localization control unit 24 sets a head-related transfer function for the right ear in the head-related transfer function convolution unit 2012 for the right ear of the signal processing unit 22 for the seat B, in accordance with the target localization position. In this case, the head-related transfer function from the target localization position to the right ear of the user of the seat B is set to correspond to a transfer function in accordance with the target localization position.

Further, in accordance with the target localization direction, the localization control unit 24 also performs processing to cause the left/right balance adjustment circuitries 203 of the signal processing unit 21 for the seat A and the signal processing circuitry 22 for the seat B to adjust a level balance between an L signal and an R signal so that a sense of localization in the target localization direction is enhanced.

Embodiments of the present disclosure have been described above.

According to the embodiments described above, in an audio system using speakers provided at the left and right sides of two seats disposed side by side, a signal correlated with all outputs of the speakers for the respective seats is output from a single front speaker F_SPK disposed at a central position in a lateral direction in front of the two seats. As a result, a localization position perceived by users of the two seats is drawn forward, and a favorable sense of localization at a front position can be achieved for the users of both seats.

In the above description, the localization control unit 24 has been described as setting a common target localization position and a common target localization direction for users of the seats A and B. However, different target localization positions and different target localization directions may be set for the users of the seats A and B, and head-related transfer functions for the left ear and the right ear corresponding to the respective target localization positions and target localization directions may be set in the head-related transfer function convolution circuitries 201 of the signal processing circuitries 21 and 22 for the seats A and B.

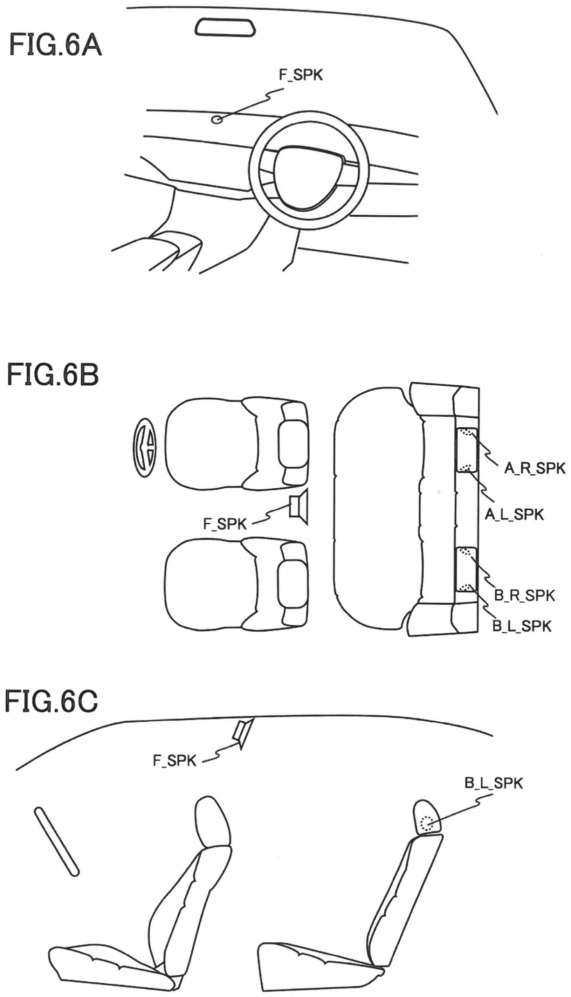

In this case, the localization control unit 24 causes the F signal of the correlation component extraction unit 23 for both seats to be output to the front speaker F_SPK only when both target localization directions of the users of the seats A and B are within the front range. In the above description, the front speaker F_SPK is arranged at a position above the rearview mirror of the vehicle. However, the front speaker F_SPK may be arranged at a different position between the driver's seat and the front passenger seat, which are the front seats in the vehicle, such as a central position of a dashboard as illustrated in FIG. 6A. Further, as illustrated in FIG. 6B, the embodiment described above may be applied to a right rear seat and a left rear seat in the vehicle as the seat A and the seat B. In this case, the front speaker F_SPK may be arranged at a position in front of the rear seats, such as a central position of a ceiling in a lateral direction as illustrated in FIG. 6C.

According to the present disclosure, it is possible to achieve a favorable sense of localization of a sound image at a front position with the audio system using speakers provided at the left and right sides of a seat.

Although embodiments of the present disclosure have been described above, it is to be understood that the present disclosure is not limited thereto. Various modifications may be made without departing from the scope of the appended claims.

## Claims

1. An audio system, comprising:
a first left speaker arranged at a position corresponding to a left side of a head of a user who sits on a first seat;
a first right speaker arranged at a position corresponding to a right side of the head of the user who sits on the first seat;
a second left speaker arranged at a position corresponding to a left side of a head of a user who sits on a second seat, the second seat being disposed side by side with the first seat;
a second right speaker arranged at a position corresponding to a right side of the head of the user who sits on the second seat;
a front speaker arranged at a central position between the first seat and the second seat in a lateral direction, the central position being in front of the first seat and the second seat; and
acoustic signal processing circuitry configured to:
output a left channel signal of a first audio signal to the first left speaker, the first audio signal being a stereo two-channel signal;
output a right channel signal of the first audio signal to the first right speaker;
output a left channel signal of a second audio signal to the second left speaker, the second audio signal being a stereo two-channel signal identical to or different from the first audio signal;
output a right channel signal of the second audio signal to the second right speaker;
extract a component correlated with all of the left channel signal and the right channel signal of the first audio signal and the left channel signal and the right channel signal of the second audio signal; and
output the extracted component as a front channel signal to the front speaker.

2. The audio system according to claim 1, wherein
the acoustic signal processing circuitry is further configured to:
generate the left channel signal of the first audio signal by convolving a monaural one-channel audio signal with a transfer function such that a head-related transfer function from a first localization position of a sound image to a left ear of the user who sits on the first seat and a transfer function to the left ear of the user who sits on the first seat are matched;
generate the right channel signal of the first audio signal by convolving the monaural one-channel audio signal with a transfer function such that a head-related transfer function from the first localization position of the sound image to a right ear of the user who sits on the first seat and a transfer function to the right ear of the user who sits on the first seat are matched;
generate the left channel signal of the second audio signal by convolving the monaural one-channel audio signal with a transfer function such that a head-related transfer function from a second localization position of the sound image to a left ear of the user who sits on the second seat and a transfer function to the left ear of the user who sits on the second seat are matched; and
generate the right channel signal of the second audio signal by convolving the monaural one-channel audio signal with a transfer function such that a head-related transfer function from the second localization position of the sound image to a right ear of the user who sits on the second seat and a transfer function to the right ear of the user who sits on the second seat are matched.

3. The audio system according to claim 2, wherein the acoustic signal processing circuitry is further configured to output the front channel signal to the front speaker only when a direction of the localization position of the sound image is within a predetermined angular range centered on a forward direction, and to stop outputting the front-channel signal to the front speaker when the direction of the localization position of the sound image is not within the predetermined angular range.

4. The audio system according to claim 2 or 3, wherein
the acoustic signal processing circuitry is configured to set the first localization position of the sound image used for generating the first audio signal and the second localization position of the sound image used for generating the second audio signal to be different.

5. The audio system according to one of claims 1 to 4, wherein
the first seat and the second seat are disposed side by side in a vehicle.

6. The audio system according to one of claims 1 to 5, wherein
the first seat is a driver's seat in a vehicle, and
the second seat is a front passenger seat in the vehicle.
